# EUROPÄISCHE PATENTSCHRIFT

(11) **EP 2 473 908 B1**
(45) Veröffentlichungstag und Bekanntmachung des Hinweises auf die Patenterteilung: **11.10.2017**
(21) Anmeldenummer: 10745574.3
(22) Anmeldetag: 19.08.2010
(51) Int. Cl.: G06F 3/048, B60K 35/00, B60R 16/023, G06F 3/0483, B60W 10/24

(54) **VERFAHREN UND VORRICHTUNG ZUM ANZEIGEN VON INFORMATIONEN**
METHOD AND DEVICE FOR DISPLAYING INFORMATION
PROCÉDÉ ET DISPOSITIF POUR AFFICHER DES INFORMATIONS

(30) Priorität: 04.09.2009 DE 102009040268; 04.06.2010 DE 102010022721
(43) Veröffentlichungstag der Anmeldung: 11.07.2012
(73) Patentinhaber: Volkswagen Aktiengesellschaft, 38440 Wolfsburg (DE)
(72) Erfinder: DEHMANN, Rainer, 10961 Berlin (DE); HAUSCHILD, Frank, 10587 Berlin (DE)
(86) Internationale Anmeldenummer: PCT/EP2010/005078
(87) Internationale Veröffentlichungsnummer: WO 2011/026564

(56) Entgegenhaltungen:
- EP-A2- 2 068 237
- WO-A1-2007/121557
- US-A1- 2007 045 961
- THURROTT P: "Windows Vista Feature Focus: Windows Flip and Flip 3D", INTERNET CITATION, 25. August 2008 (2008-08-25), Seiten 1-4, XP007915731, [gefunden am 2010-11-11]
- HIGASHINO K: "WinFlip v.0.42 readme", INTERNET CITATION, 24. Oktober 2007 (2007-10-24), Seiten 1-4, XP007915732, Gefunden im Internet: URL:http://winflip.stylekings.de/wiki/doku .php?id=readme_en.txt [gefunden am 2010-11-11]
- KENT WITTENBURG ET AL: "Rapid Serial Visual Presentation Techniques for Consumer Digital Video Devices", INTERNET CITATION, August 2003 (2003-08), XP002424198, Gefunden im Internet: URL:http://www.merl.com/reports/docs/TR200 3-19.pdf [gefunden am 2007-03-09]

## Beschreibung

Die vorliegende Erfindung betrifft ein Verfahren zum Anzeigen einer Vielzahl von flächigen, geordneten Objekten auf einer Anzeigefläche, bei dem von einer Benutzerschnittstelleneinrichtung Grafikdaten erzeugt werden, die die Anzeigefläche so ansteuern, dass eine Teilmenge der Objekte perspektivisch dargestellt werden, wobei ein erstes Objekt dieser Teilmenge perspektivisch im Vordergrund dargestellt wird, und auf eine Eingabe mittels einer Eingabeeinrichtung eine Recheneinheit der Benutzerschnittstelleneinrichtung die Grafikdaten so verändert, dass ein anderes, zweites Objekt perspektivisch im Vordergrund dargestellt wird. Die vorliegende Erfindung betrifft ferner eine dazugehörige Vorrichtung zum Anzeigen von Informationen. Das Verfahren und die Vorrichtung können insbesondere in einem Fahrzeug eingesetzt werden.

Graphische Benutzerschnittstellen sind insbesondere bei Computern und bei Bediensystemen von elektronischen Einrichtungen bekannt, bei denen sie dem Benutzer die Interaktion mit der Maschine über grafische Symbole, auch als Objekte bezeichnet, erlaubt. Diese Objekte können dabei auf vielfältige Weise gesteuert werden. Sie können beispielsweise mittels einer Maus, über eine berührungsempfindliche Anzeigefläche oder über Gesten, die vor oder auf der Anzeigefläche erfasst und in Steuersignale umgewandelt werden, ausgewählt oder verschoben werden.

Um einem Benutzer eine möglichst einfache und intuitive Benutzerschnittstelle zur Verfügung zu stellen, sind diverse Verfahren entwickelt worden, die auf die jeweiligen ergonomischen und/oder situationsabhängigen Anforderungen ausgerichtet sind. Bei der Konzeption eines derart angepassten Bediensystems werden dabei sowohl die motorischen Fähigkeiten als auch die visuelle Erfassungsgabe des Benutzers für spezifische Bediensituationen berücksichtigt.

Die US 2008/0120571 A1 beschreibt ein Verfahren zum Darstellen von digitalen Gegenständen mittels virtueller Stapelung zum Erzielen eines perspektivischen oder stereoskopischen Eindrucks. Die Stapelung und Überlappungsregeln sind dabei vom Benutzer je nach seinen Wünschen und Anforderungen veränderbar. Mit dem Verfahren können insbesondere sogenannte Icons oder Thumbnails, aber auch andere digitale Gegenstände wie z.B. Texte dargestellt werden.

In der US 5 621 874 wird ein Verfahren zum Anzeigen von elektronischen Dokumenten auf einer computersteuerbaren Anzeigfläche beschrieben, wobei die angezeigten Dokumente entlang eines Pfades in einer perspektivisch dreidimensionalen Stapelung dargestellt werden. Der Pfad kann dabei eine beliebige eindimensionale Form annehmen, z.B. eine Gerade oder eine Schraube.

In einem Kraftfahrzeug gibt es verschiedene Informations- und Kommunikationsbereiche, denen Anzeigeinstrumente zugeordnet sind. Sie dienen der Information des Fahrers und der Mitfahrer. Ferner können sie den Fahrer bei der Navigation oder der Kommunikation mit der Außenwelt unterstützen. Die Anzeige kann insbesondere verkehrs- oder betriebsbezogene Daten des Fahrzeugs visuell darstellen. In der Nähe des primären Sichtfelds des Fahrers ist typischerweise ein sogenanntes Kombiinstrument angeordnet. Üblicherweise befindet es sich im Cockpit hinter dem Lenkrad, wobei es durch eine Öffnung des Lenkrads sichtbar ist. Es dient insbesondere der Anzeige der Geschwindigkeit, des Tankinhalts, der Kühlertemperatur und anderer betriebsbezogener Informationen des Kraftfahrzeugs. Ferner können Radio- und Audiofunktionen dargestellt werden. Schließlich können Menüs für Telefon, Navigation, Telematikdienste und Multimediaanwendungen angezeigt werden. Als Display werden üblicherweise Flüssigkristallanzeigen in verschiedenen Ausführungen verwendet.

Aufgrund der Zunahme elektronischer Einrichtungen in Fahrzeugen ist man inzwischen dazu übergegangen, auch Fahrzeuge mit einem Bediensystem auszustatten, das über eine graphische Benutzerschnittstelleneinrichtung verfügt, um die diversen obengenannten Einrichtungen des Fahrzeugs mittels weniger Bedienelemente steuern zu können. Insbesondere ist es dabei wünschenswert, die Informationen so darzustellen, dass sie schnell und intuitiv vom Fahrer aufgenommen werden können, so dass das Erfassen der dargestellten Informationen nicht zu einer Ablenkung des Fahrers während der Fahrt führt. Ferner soll die Bedienung so intuitiv, einfach und schnell durchführbar sein, dass der Fahrer die Einrichtungen des Fahrzeugs, deren Informationen von der Anzeigeeinrichtung dargestellt werden, auch während der Fahrt bedienen kann. Die Informationsdarstellung und die mit einer Informationsdarstellung verbundene Bedienung in dem Kraftfahrzeug trägt somit zur Sicherheit beim Führen des Kraftfahrzeugs bei. In der DE 10 2007 039 442 A1 ist ein Verfahren zum Anzeigen von Informationen in einem Fahrzeug beschrieben, bei dem Objekte auf einem virtuellen, perspektivisch dargestellten Ring angeordnet dargestellt werden. Auf eine Bedienaktion werden die Grafikdaten so verändert, dass sich die Objekte auf dem virtuellen Ring karussellartig drehen. Der virtuelle Ring wird insbesondere perspektivisch dreidimensional in einer Ansicht von schräg oben dargestellt, so dass nicht nur die Objekte auf dem vorderen Abschnitt des virtuellen Rings sichtbar sind, sondern auch Objekte auf der hinteren Seite des virtuellen Rings. Die US 2007/045961 A1 beschreibt ein Verfahren zum Navigieren durch eine Benutzeroberfläche. Dabei werden Karten in Stapel hintereinander angeordnet, wobei die erste Karte jeden Stapels vollständig im Vordergrund dargestellt wird, und zusätzlich angedeutet angezeigt wird, dass sich weitere Karten im Stapel befinden. Durch Benutzereingaben kann durch die Karten in einem ausgewählten Stapel geblättert werden. In der WO 2007/121557 A1 können flächige Anzeigeobjekte in Stapeln angezeigt werden. Ein Stapel kann dadurch ausgewählt werden, dass ein Benutzer mit einem Eingabegerät eine geschlossene Kurve um den Stapel zeichnet. Wenn der Benutzer anschließend das Eingabegerät über den Stapel bewegt, wird der Stapel aufgelöst und die jeweiligen Anzeigeobjekte in einer Rasteransicht angezeigt. Nach einer zusätzlichen Eingabe können einzelne Anzeigeobjekte des Stapels ausgewählt werden. In einem zusätzlichen Modus können Stapel perspektivisch auseinandergezogen dargestellt werden. Es ist die Aufgabe der vorliegenden Erfindung, ein alternatives Verfahren und eine dazugehörige Vorrichtung der eingangs genannten Art bereitzustellen, die eine schnelle, intuitive und einfache Bedienung ermöglichen.

Diese Aufgabe wird erfindungsgemäß durch ein Verfahren mit den Merkmalen des Anspruchs 1 sowie einer Vorrichtung mit den Merkmalen des Anspruchs 11 gelöst. Vorteilhafte Aus- und Weiterbildungen ergeben sich aus den abhängigen Ansprüchen.

Das erfindungsgemäße Verfahren ist dadurch gekennzeichnet, dass die graphischen Objekte perspektivisch hintereinander in einem Stapel angeordnet dargestellt werden, wobei das im Vordergrund dargestellte Objekt die Stirnseite des Stapels bildet, und auf die Eingabe eines Benutzers die Graphikdaten derart verändert werden, dass das erste Objekt und die zwischen dem ersten und zweiten Objekt in dem Stapel angeordneten Objekte senkrecht zur Stapelachse bewegt und ausgeblendet werden oder dass die zwischen dem ersten und zweiten Objekt geordneten Objekte und das zweite Objekt eingeblendet und senkrecht zur Stapelachse bewegt werden, bis das zweite Objekt perspektivisch im Vordergrund dargestellt wird. Die Darstellung der Objekte in einem perspektivischen Stapel hat den Vorteil, dass sich der Betrachter, auch wenn eine Vielzahl von Objekten grafisch dargestellt wird, auf das an der Stirnseite zuoberst angezeigte Objekt konzentrieren kann, ohne dabei die Ordnung der Objekte aus den Augen zu verlieren.

Die einblendende Bewegung an die Stirnseite des Stapels bzw. die ausblendende Bewegung der Objekte von der Stirnseite des Stapels weg erleichtert es dem Benutzer, den Zusammenhang der ursprünglichen Darstellung mit der neu erzeugten Darstellung visuell zu erfassen. Dabei liegt die perspektivische Stapelachse typischerweise im Wesentlichen in der Richtung senkrecht zur Anzeigefläche oder weist zumindest eine relativ große Komponente in diese Richtung auf. Die perspektivische Darstellung ist vorteilhafterweise leicht gekippt, so dass z.B. die Objekte im Stapel perspektivisch hintereinander und dabei leicht nach oben verschoben erscheinen. Die auszublendenden Objekte werden typischerweise in eine vorbestimmte Richtung, z.B. nach unten bewegt und ausgeblendet. Die Bewegung und das Ausblenden können optional auch derart dargestellt werden, dass ein ausgeblendetes Objekt perspektivisch im Hintergrund an das Ende des Stapels oder an eine vorbestimmte Position wieder einsortiert wird. Hierdurch kann der Nutzer visuell leichter erfassen, wohin die Objekte bewegt wurden. Beim Einblenden kann analog in umgekehrter Weise verfahren werden.

Insbesondere werden das erste Objekt und die zwischen dem ersten und zweiten Objekt angeordneten Objekte nacheinander ausgeblendet oder die zwischen dem ersten und zweiten Objekt geordneten Objekte und das zweite Objekt nacheinander eingeblendet. Hierdurch kann der Benutzer visuell leichter erfassen, wie viele Objekte bewegt wurden. Alternativ können die Objekte aber auch blockweise ein- oder ausgeblendet werden.

Die Objekte können zu einem Bediensystem mit einer hierarchischen Menüstruktur gehören. Ein Menü zeigt verschiedene Menüpunkte und gegebenenfalls den Menüpunkten zugeordnete Grafiken oder Icons an. Bei der Auswahl eines Menüpunkts öffnet sich ein Untermenü mit weiteren Untermenüpunkten. Die Auswahl kann nach an sich bekannter Art erfolgen, beispielsweise mittels einer Maus, über eine berührungsempfindliche Anzeigefläche oder über Gesten, die vor oder auf der Anzeigefläche erfasst und in Steuersignale umgewandelt werden. Die Menüstruktur kann über mehrere Hierarchieebenen fortgeführt werden. Außerdem kann einem Menüpunkt anstatt eines Untermenüs ein bestimmtes Anzeigebild zugeordnet sein, welches die dem Menüpunkt zugeordnete Information darstellt.

Der angezeigte Stapel bei dem erfindungsgemäßen Verfahren entspricht insbesondere einer Hierarchieebene im Menü, wobei mittels der Eingabe des erfindungsgemäßen Verfahrens eine Navigation innerhalb derselben Hierarchieebene ermöglicht wird. Die Auswahl eines Objekts entspricht somit insbesondere einem Wechsel in eine andere Hierarchieebene der Menüstruktur oder dem Auslösen einer über das Menü zu steuernden Funktion. Hierbei ist es nun zweckmäßig, dass nur das die Stirnseite des Stapels bildende Objekt auswählbar ist. Dadurch kann eine Fehlbedienung in bewegter Umgebung, beispielsweise beim Einsatz des erfindungsgemäßen Verfahrens während einer holperigen Fahrt in einem Fahrzeug, reduziert werden.

In einer Ausgestaltung der Erfindung werden mindestens zwei Stapel von Objekten auf der Anzeigefläche dargestellt, wobei vorgesehen sein kann, dass die Darstellung der Stapel die Anzahl der in dem Stapel enthaltenen Objekte wiedergibt. Eine Möglichkeit die Anzahl der Objekte im Stapel anzuzeigen, besteht in der unterschiedlichen perspektivischen Tiefe der einzelnen Stapel. Eine andere Möglichkeit besteht in der perspektivischen Anordnung und Darstellung aller Objekte im Stapel.

In einer weiteren Ausgestaltung des erfindungsgemäßen Verfahrens werden die Stapel von Objekten in einem Anzeige- oder einem Bedienmodus dargestellt, wobei im Anzeigemodus im Wesentlichen nur die die Stirnfläche bildenden Objekte dargestellt werden. Im Bedienmodus werden dagegen alle im Stapel enthaltenen Objekte bzw. bei großen Stapeln ein Teil der Objekte dargestellt. Dabei können die Objekte im Stapel so dargestellt werden, dass auch Objekte innerhalb des Stapels, also nicht nur die die Stirnfläche bildenden Objekte, ausgewählt werden können.
In einer bevorzugten Weiterbildung der Erfindung werden die Stapel im Anzeigemodus dargestellt und bei Annäherung einer Bedieneinrichtung, beispielsweise einer Hand erfolgt eine Umschaltung in den Bedienmodus.

Die Eingabe erfolgt beispielsweise über eine als manuelles Bedienelement ausgestaltete, räumlich von dem angezeigten Stapel oder von der Anzeigefläche beabstandete Eingabeeinrichtung. Das manuelle Bedienelement kann dabei als Tast- oder Schiebeschalter neben der Anzeigefläche angeordnet sein und beispielsweise eine fest zugeordnete Bildiauffunktion (auch als sogenannter Scrollbar oder "Page-Up/Down"-Funktion bekannt) aufweisen. Alternativ kann ein solches Bedienelement auch als sogenannter Softkey ausgestaltet sein, bei dem die Funktion kontextspezifisch auf einem dem Bedienelement zugeordneten Bereich auf der Anzeigefläche angezeigt wird.

In einer Ausgestaltung des erfindungsgemäßen Verfahrens ist vorgesehen, dass die Eingabe durch eine in bidirektionaler Richtung ausführbare Bedienaktion erfolgt und in Abhängigkeit von der Richtung der Bedienaktion die zwischen dem ersten und zweiten Objekt angeordneten Objekte ein- oder ausgeblendet werden. Beispielsweise wird ein oben erwähnter Schiebeschalter oder eine analog ausgestaltete Schaltfläche nach oben bewegt, woraufhin neue Objekte senkrecht zur Stapelachse von unten eingeblendet werden. Umgekehrt können durch eine entgegengesetzte Bedienaktion die Objekte senkrecht zur Stapelachse nach unten bewegt und ausgeblendet werden. Die gleiche Orientierung der Bedienaktion und der Richtung des Ein- bzw. Ausblendens der Objekte kann dabei vom Benutzer visuell gut verarbeitet werden und ermöglicht damit eine besonders intuitive Bedienung.

Die Eingabe ist dabei nicht nur auf die oben bereits erwähnten manuellen Bedienelemente beschränkt. Es kann insbesondere vorgesehen sein, dass die Objekte auf einer Anzeigefläche mit einer berührungsempfindlichen Oberfläche dargestellt werden und die Eingabe durch eine Geste auf der berührungsempfindlichen Oberfläche erfolgt. Beispielsweise wischt der Benutzer mit einem Finger schnell über einen definierten Bereich auf der Anzeigefläche von unten nach oben. Ferner kann eine Eingabe auch über Schaltflächen erfolgen, die auf der Anzeigefläche räumlich beabstandet von dem angezeigten Stapel dargestellt werden.

Unter einer Schaltfläche wird im Sinne der Erfindung ein Steuerelement einer graphischen Benutzerschnittstelle verstanden. Bei einer Auswahl einer Schaltfläche wird eine ihr zugeordnete Funktion ausgeführt, indem beispielsweise eine Einrichtung gesteuert wird, deren Bedienung von der Informationsanzeige unterstützt wird. Die Schaltflächen können somit herkömmliche mechanische Schalter ersetzen. Die Schaltflächen können beliebig auf einer frei programmierbaren Anzeigefläche erzeugt und angezeigt werden.

Die graphischen Objekte stellen insbesondere Menüpunkte eines Benutzermenüs dar, das Mediendateien einer Infotainmenteinrichtung oder Einträge eines Telekommunikationssystems in einem Fahrzeug umfasst.

Die erfindungsgemäße Vorrichtung zum Anzeigen einer Vielzahl von flächigen, geordneten Objekten, umfasst eine Anzeigefläche zum perspektivischen Darstellen wenigstens einer Teilmenge der Objekte, eine Benutzerschnittstelleneinrichtung, mit welcher Grafikdaten der Objekte erzeugbar und mittels einer Recheneinheit veränderbar sind, wobei ein erstes Objekt perspektivisch im Vordergrund darstellbar ist, und eine mit der Benutzerschnittstelleneinrichtung gekoppelten Eingabeeinrichtung zur Erfassung einer Eingabe, durch die mittels der Recheneinheit der Benutzerschnittstelleneinrichtung die Grafikdaten so veränderbar sind, dass ein anderes, zweites Objekt perspektivisch im Vordergrund darstellbar ist. Die erfindungsgemäße Vorrichtung ist dadurch gekennzeichnet, dass die Grafikdaten mittels der Benutzerschnittstelleneinrichtung so steuerbar sind, dass die grafischen Objekte perspektivisch hintereinander in einem Stapel angeordnet darstellbar sind, wobei das im Vordergrund dargestellte Objekt die Stirnseite des Stapels bildet, und die Eingabeeinrichtung derart mit der Benutzerschnittstelleneinrichtung gekoppelt ist, dass auf die Eingabe die Graphikdaten derart veränderbar sind, dass das erste Objekt und die zwischen dem ersten und dem zweiten Objekt in dem Stapel angeordneten Objekte senkrecht zur Stapelachse bewegt und ausgeblendet werden oder dass die zwischen dem ersten und dem zweiten Objekt geordneten Objekte und das zweite Objekt eingeblendet und senkrecht zur Stapelachse bewegt werden, bis das zweite Objekt perspektivisch im Vordergrund dargestellt wird. Die Vorrichtung ist insbesondere zum Durchführen des erfindungsgemäßen Verfahrens geeignet. Sie weist somit auch die Vorteile des erfindungsgemäßen Verfahrens auf.

Erfindungsgemäß ist des Weiteren ein Fahrzeug mit einer solchen Vorrichtung ausgestattet.

Die Erfindung wird nun anhand eines Ausführungsbeispiels mit Bezug zu den Figuren näher erläutert.
- Figur 1: zeigt schematisch den Aufbau eines Ausführungsbeispiels der erfindungsgemäßen Vorrichtung zum Anzeigen von Informationen und
- die Figuren 2a - 2f: zeigen Eingaben und Anzeigen einer Vielzahl von flächigen Objekten auf einer Anzeigefläche, wie sie nach einem Ausführungsbeispiels des erfindungsgemäßen Verfahrens erzeugt wurden.
- Fig. 3: zeigt die Darstellung mehrerer Stapel von Objekten im Anzeigemodus
- Fig. 4a - 4b: zeigen die Darstellung mehrerer Stapel von Objekten im Bedienmodus in zwei Varianten

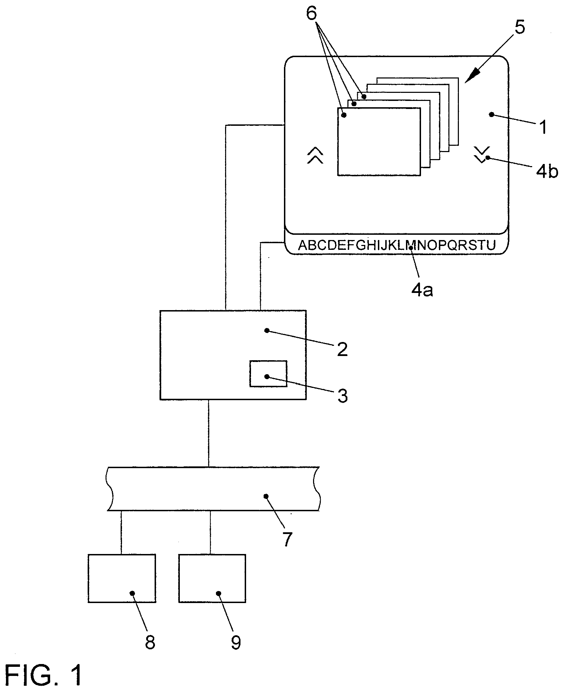

In Figur 1 ist schematisch der Aufbau eines Ausführungsbeispiels der erfindungsgemäßen Vorrichtung zum Anzeigen von Informationen dargestellt. Die Vorrichtung umfasst eine Anzeigefläche 1 zur grafischen Darstellung von Informationen. Die Anzeigefläche 1 ist frei programmierbar, d. h. es lassen sich beliebige Grafikdaten erzeugen, welche auf der Anzeigefläche 1 dargestellt werden, und verfügt über eine berührungsempfindliche Oberfläche. Sie kann nach an sich bekannter Art beispielsweise als Matrix-Display, z. B. als LCD (liquid crystal display), insbesondere als Farbdisplay in TFT-(thin-film transistor)-Technik ausgestaltet sein, ohne das Ausführungsbeispiel hierauf zu beschränken. Die Anzeigefläche 1 ist insbesondere in einem Bereich des Fahrzeugs befestigt, der zumindest für den Fahrer gut sichtbar ist. Beispielsweise ist die Anzeigefläche 1 in der Mittelkonsole des Fahrzeugs untergebracht.

Die Anzeigefläche 1 ist mit einer Benutzerschnittstelleneinrichtung 2 verbunden, mit welcher Grafikdaten für auf der Anzeigefläche 1 darstellbare grafische Objekte erzeugbar sind. Ferner ist die Benutzerschnittstelleneinrichtung 2 mit Tastschaltern 4a verbunden, über welche der Benutzer Einrichtungen des Fahrzeugs, deren Informationen auf der Anzeigefläche 1 angezeigt werden, steuern kann. Die Einrichtungen des Fahrzeugs können außerdem über auf der Anzeigefläche 1 angezeigte Schaltflächen 4b sowie mittels Gesten, die auf der berührungsempfindlichen Oberfläche der Anzeigefläche 1 erfassbar sind, gesteuert werden. Bezüglich der Vielfalt der Eingabemöglichkeiten sei auf die eingangs zitierte DE 10 2007 039 442 A1 verwiesen. Die erwähnten Einrichtungen des Fahrzeugs umfassen im Ausführungsbeispiel eine Infotainmenteinrichtung 8 und ein Telekommunikationssystem 9, die über den Datenbus 7 im Fahrzeug datentechnisch mit der Benutzerschnittstelleneinrichtung 2 verbunden sind.

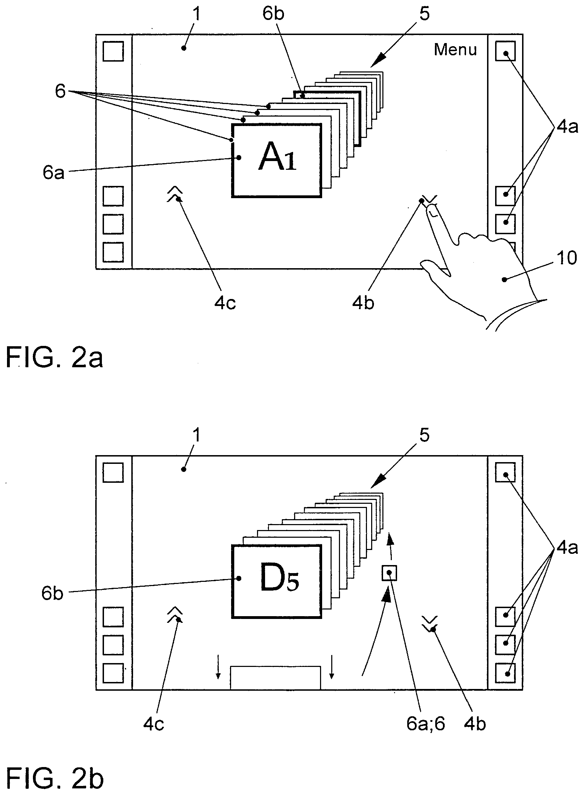

Die Benutzerschnittstelleneinrichtung 2 bereitet mithilfe der Recheneinheit 3 die von den Einrichtungen 8, 9 empfangenen Daten gemäß dem erfindungsgemäßen Verfahren auf, das im Folgenden mit Bezug zu den Figuren 2a - 2f im Detail erläutert wird.

In Figur 2a ist eine Anzeigefläche 1 dargestellt, auf der graphische Objekte 6 perspektivisch hintereinander in einem Stapel 5 angeordnet dargestellt werden, wobei das im Vordergrund dargestellte Objekt 6a die Stirnseite des Stapels 5 bildet. Die graphischen Objekte 6 sind bildlich gestaltete Listen und stellen Menüpunkte einer Infotainmenteinrichtung 8 in einem Fahrzeug dar. Sie repräsentieren beispielsweise Musiktitel auf einer über die Infotainmenteinrichtung 8 abspielbaren CD (Compact Disk) oder Radiosender, in dessen Sendegebiet sich das Fahrzeug momentan befindet. Angezeigt und in dieser Darstellung allein auswählbar ist der zuoberst an der Stirnseite des Stapels 5 liegende Musiktitel "A1", der durch das Objekt 6a repräsentiert wird. Möchte der Fahrer des Fahrzeugs nun ein neues Musikstück auswählen, beispielsweise den Musiktitel "D5", der durch das Objekt 6b repräsentiert wird, so führt er mit seiner Hand 10 eine Eingabe über eine der Schaltflächen 4b aus. Er berührt dazu beispielsweise mit einer Fingerspitze die räumlich von dem Stapel 5 beabstandete Schaltfläche 4b, der die Funktion des Weiterblätterns in Blickrichtung im Stapel 5 zugeordnet ist.

In Figur 2b ist dargestellt, wie auf diese Eingabe die Graphikdaten derart verändert werden. Das erste Objekt 6a und die zwischen dem ersten 6a und zweiten Objekt 6b in dem Stapel 5 angeordneten Objekte 6 werden perspektivisch einzeln nacheinander senkrecht nach unten bewegt und dabei ausgeblendet. An der Hinterseite des Stapels werden diese Objekte 6 perspektivisch wieder einsortiert, indem sie im Hintergrund perspektivisch von unten wieder erscheinen. Wenn der gewünschte, durch das Objekt 6b repräsentierte Musiktitel "D5" schließlich an der Stirnfläche des Stapels 5 erscheint, zieht der Fahrer seine Hand 10 von der Schaltfläche 4b zurück und das sukzessive Ausblenden wird unterbrochen.

Ebenso könnte der Fahrer in Figur 2a mit der Schaltfläche 4c in die entgegengesetzte Richtung zurückblättern (nicht dargestellt), wodurch die zwischen dem ersten 6a und zweiten Objekt 6b geordneten Objekte 6 und das zweite Objekt 6b senkrecht von unten eingeblendet würden, bis das zweite Objekt 6b perspektivisch im Vordergrund dargestellt würde. Die anderen Objekte 6 des Stapels 5 würden sich entsprechend perspektivisch nach hinten verschieben. Durch diese Art der Darstellung wird der dreidimensionale Eindruck erzeugt, als ob die einzelnen Objekte 6, 6b aus der Tiefe kämen bzw. wieder in die Tiefe zurückgingen.

Das Ein- bzw. Ausblenden der Objekte 6 erfolgt bei dieser in bidirektionaler Richtung ausführbaren Bedienaktion in dieselbe Richtung, wie dies auf der jeweiligen Schaltfläche 4b, 4c dargestellt ist, was die Eingabe seitens des Fahrers und den dadurch ausgelösten Bildwechsel besonders intuitiv und visuell leicht nachvollziehbar macht.

Alternativ kann auch einem der am Rande der Anzeigefläche 1 angeordneten Tastschalter 4a die den Schaltflächen 4b, 4c zugeordnete Funktion zum Vorwärts- bzw. Rückwärtsblättern zugeordnet werden, so dass der Fahrer auch durch das Betätigen dieser Tastschalter 4a die Eingabe hätte tätigen können.

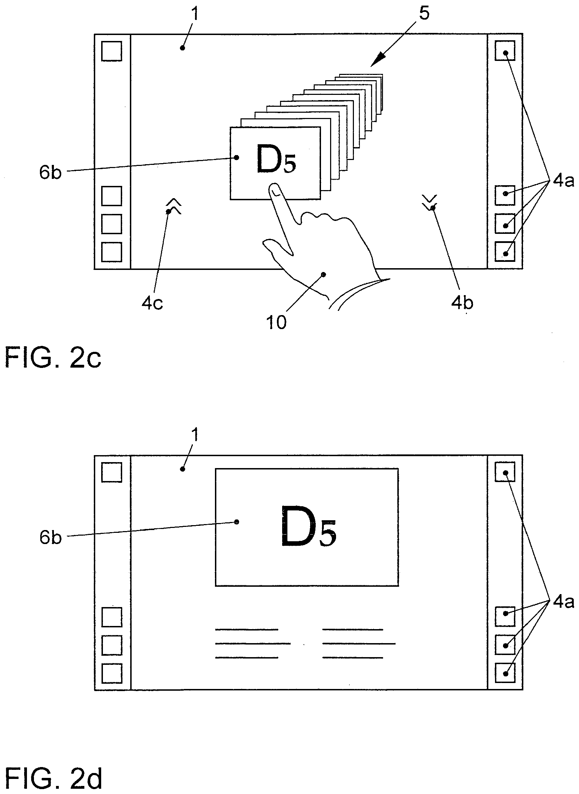

Hat nun der Fahrer durch seine Eingabe die Anzeige wunschgemäß nach dem Ausführungsbeispiel des erfindungsgemäßen Verfahrens verändert, so wird ihm der gewünschte, durch das Objekt 6b repräsentierte Musiktitel "D5" an der Stirnseite des Stapels 5 angezeigt. Der Fahrer kann nun dieses Objekt beispielsweise durch einfaches Berühren des entsprechenden Bereichs auf der Anzeigefläche 1 öffnen, wie dies in Figur 2c dargestellt ist. Die Detailansicht in der darunterliegenden Menühierarchie ist in Figur 2d dargestellt. Dort werden dem Fahrer dann weiterführende Informationen, z.B. Titel, Interpret, Länge des Soundtracks oder weitere Funktionalitäten angezeigt. Außerdem werden ihm auf der Anzeigefläche 1 neben den Tastschaltern 4a kontextspezifische Funktionalitäten der danebenliegenden Tastschalter 4a angezeigt, z.B. "Jetzt abspielen" oder "Musiktitel als Favorit übernehmen".

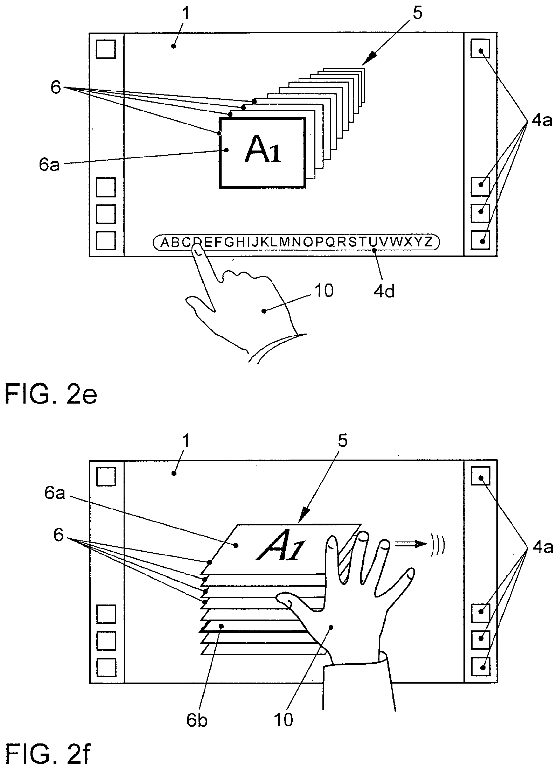

In den Figuren 2e und 2f sind weitere Ausgestaltungen der Art der Nutzereingabe dargestellt. In Figur 2e erfolgt die Eingabe über eine alphabetische Leiste, die in Form einer langgestreckten Schaltfläche 4d am unteren Rand der Anzeigefläche 1 kontextspezifisch eingeblendet werden kann. Insbesondere kann es für manche Anwendungsprogramme zweckmäßig sein, alphabetisch zu suchen oder zumindest durch eine alphabetische Vorwahl den Suchvorgang zu beschleunigen. So könnte beispielsweise die oben beschriebene Suche des Musiktitels "D5" zunächst durch die grobe Vorwahl des Buchstaben "D" auf der Schaltfläche 4d erfolgen, wobei die Objekte 6 im Block nach unten ausgeblendet werden. Die Feinauswahl kann dann auf die mit Bezug zu den Figuren 2a bis 2b beschriebenen Schritte erfolgen.

In Figur 2f ist gezeigt, wie die Eingabe durch eine Geste auf der berührungsempfindlichen Oberfläche der Anzeigefläche 1 erfolgt. In diesem Falle sind die Objekte 6 wie ein Stapel Papier übereinander gestapelt. Ein schnelles Wischen mit der Hand 10 von links nach rechts über den Stapel 5 wird als die oben mehrfach beschriebene Eingabe des erfindungsgemäßen Verfahrens interpretiert, wodurch die Objekte 6a, 6 solange nacheinander nach rechts ausgeblendet werden, bis das Objekt 6b zuoberst auf dem Stapel 5 angezeigt wird.

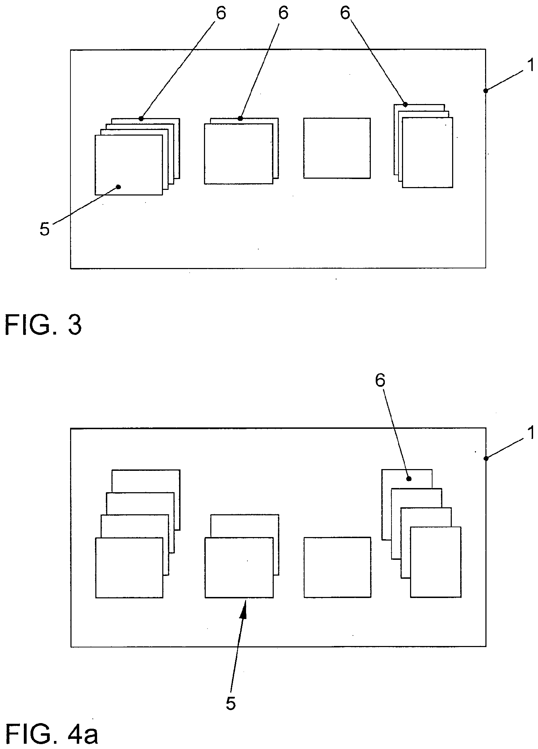

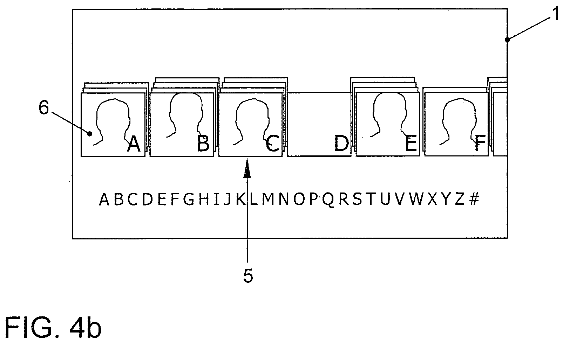

Die Fig. 3 und 4a, 4b, zeigen eine schematische Darstellung der Anzeigefläche 1 mit mehreren Stapeln 5 von Objekten 6, beispielsweise für die Anzeige von Telefonbüchern, eingespeicherten Navigationszielen oder vorhandenen Mediadateien. Dabei sind in Fig. 3 die Stapel 5, die Teile von vorhandenen Listen darstellen im Anzeigemodus gezeigt. Im Anzeigemodus werden im Wesentlichen nur die die Stirnfläche oder -seite der Stapel 5 bildenden Objekte 6 auf der Anzeigefläche 1 wiedergegeben, die anderen Objekte 6 des Stapels werden nur angedeutet gezeigt. Im Bedienmodus, in den beispielsweise bei Annäherung eines Bedienelementes, insbesondere einer Hand umgeschaltet wird, werden die Stapel 5 auseinandergezogen dargestellt (Fig. 4a und Fig. 4b), so dass die Objekte 6 der einzelnen Stapel 5 sichtbar werden. Dabei können die Objekte 6 so voneinander gelöst dargestellt sein, dass sie einzeln durch eine Bedienhandlung auswählbar sind.

### Bezugszeichenliste

- 1: Anzeigefläche
- 2: Benutzerschnittstelleneinrichtung
- 3: Recheneinheit
- 4a: Tastschalter
- 4b - 4d: Schaltflächen
- 5: perspektivischer Stapel
- 6: grafische Objekte
- 6a: erstes Objekt
- 6b: zweites Objekt
- 7: Datenbus im Fahrzeug
- 8: Infotainmenteinrichtung
- 9: Telekommunikationssystem
- 10: Hand eines Benutzers

## Patentansprüche

1. Verfahren zum Anzeigen einer Vielzahl von flächigen, geordneten Objekten (6) auf einer Anzeigefläche (1) in einem Fahrzeug, bei dem
- von einer Benutzerschnittstelleneinrichtung (2) Grafikdaten erzeugt werden, die die Anzeigefläche (1) so ansteuern, dass eine Teilmenge der Objekte (6) perspektivisch dargestellt werden, wobei ein erstes Objekt (6a) dieser Teilmenge perspektivisch im Vordergrund dargestellt wird, und
- auf eine Eingabe mittels einer Eingabeeinrichtung (4) eine Recheneinheit (3) der Benutzerschnittstelleneinrichtung (2) die Grafikdaten so verändert, dass ein anderes, zweites Objekt (6b) perspektivisch im Vordergrund dargestellt wird, worin
- die graphischen Objekte (6) perspektivisch hintereinander in einem Stapel (5) angeordnet dargestellt werden, wobei das im Vordergrund dargestellte Objekt (6a) die Stirnseite des Stapels (5) bildet,
- der Stapel (5) von Objekten (6) in einem Anzeigemodus dargestellt wird, wobei im Anzeigemodus im Wesentlichen das die Stirnseite des Stapels (5) bildende Objekt (6a) dargestellt wird und die anderen Objekte (6) des Stapels (5) angedeutet angezeigt werden,
- bei einer Annäherung eines Bedienelements in einen Bedienmodus umgeschaltet wird, in dem der Stapel (5) perspektivisch auseinandergezogen dargestellt wird, so dass alle im Stapel (5) enthaltenen Objekte (6) oder ein Teil der Objekte (6) so dargestellt werden, dass die Objekte (6) einzeln durch eine Bedienhandlung auswählbar sind, und
- auf die Eingabe die Graphikdaten derart verändert werden, dass das erste Objekt (6a) und die zwischen dem ersten (6a) und zweiten Objekt (6b) in dem Stapel (5) angeordneten Objekte (6) senkrecht zur Stapelachse bewegt und ausgeblendet werden oder dass die zwischen dem ersten (6a) und zweiten Objekt (6b) geordneten Objekte (6) und das zweite Objekt (6b) eingeblendet und senkrecht zur Stapelachse bewegt werden, bis das zweite Objekt (6b) perspektivisch im Vordergrund dargestellt wird.

2. Verfahren nach Anspruch 1,
**dadurch gekennzeichnet,**
**dass** das erste Objekt (6a) und die zwischen dem ersten (6a) und zweiten Objekt (6b) angeordneten Objekte (6) nacheinander ausgeblendet werden oder, dass die zwischen dem ersten (6a) und zweiten Objekt (6b) geordneten Objekte (6) und das zweite Objekt (6b) nacheinander eingeblendet werden.

3. Verfahren nach Anspruch 1 oder 2,
**dadurch gekennzeichnet,**
**dass** die graphischen Objekte perspektivisch hintereinander in mindestens zwei Stapeln (5) dargestellt werden.

4. Verfahren nach Anspruch 3,
**dadurch gekennzeichnet,**
**dass** die Darstellung der Stapel (5) die Anzahl der im Stapel (5) enthaltenen Objekte (6) wiedergibt.

5. Verfahren nach einem der Ansprüche 1 oder 4,
**dadurch gekennzeichnet,**
**dass** im Anzeigemodus nur das die Stirnseite bildende Objekt (6a; 6b) auswählbar ist.

6. Verfahren nach einem der Ansprüche 1 bis 5,
**dadurch gekennzeichnet,**
**dass** die Eingabe über eine als manuelles Bedienelement (4a - 4d) ausgestaltete, räumlich von dem angezeigten Stapel (5) oder von der Anzeigefläche (1) beabstandete Eingabeeinrichtung (4) erfolgt.

7. Verfahren nach einem der vorangegangenen Ansprüche,
**dadurch gekennzeichnet, dass**
- die Eingabe durch eine in bidirektionaler Richtung ausführbare Bedienaktion erfolgt und
- in Abhängigkeit von der Richtung der Bedienaktion die zwischen dem ersten (6a) und zweiten Objekt (6b) angeordneten Objekte (6) ein- oder ausgeblendet werden.

8. Verfahren nach einem der vorangegangenen Ansprüche,
**dadurch gekennzeichnet, dass**
- die Objekte (6) auf einer Anzeigefläche (1) mit einer berührungsempfindlichen Oberfläche dargestellt werden und
- die Eingabe durch eine auf der berührungsempfindlichen Oberfläche ausgeführte Geste erfolgt.

9. Verfahren nach einem der vorangegangenen Ansprüche,
**dadurch gekennzeichnet,**
**dass** die graphischen Objekte (6) Menüpunkte eines Benutzermenüs darstellen.

10. Verfahren nach Anspruch 9,
**dadurch gekennzeichnet,**
**dass** das Benutzermenü Mediendateien einer Infotainmenteinrichtung (8) oder Einträge eines Telekommunikationssystems (9) in einem Fahrzeug umfasst.

11. Vorrichtung zum Anzeigen einer Vielzahl von flächigen, geordneten Objekten (6) in einem Fahrzeug, umfassend
- eine Anzeigefläche (1) zum perspektivischen Darstellen wenigstens einer Teilmenge der Objekte (6),
- eine Benutzerschnittstelleneinrichtung (2), mit welcher Grafikdaten der Objekte (6) erzeugbar und mittels einer Recheneinheit (3) veränderbar sind, wobei ein erstes Objekt (6a) perspektivisch im Vordergrund darstellbar ist, und
- eine mit der Benutzerschnittstelleneinrichtung (2) gekoppelten Eingabeeinrichtung (4) zur Erfassung einer Eingabe, durch die mittels der Recheneinheit (3) der Benutzerschnittstelleneinrichtung (2) die Grafikdaten so veränderbar sind, dass ein anderes, zweites Objekt (6b) perspektivisch im Vordergrund darstellbar ist, worin
- die Grafikdaten mittels der Benutzerschnittstelleneinrichtung (2) so steuerbar sind, dass die grafischen Objekte (6) perspektivisch hintereinander in einem Stapel (5) angeordnet darstellbar sind, wobei das im Vordergrund dargestellte Objekt (6a) die Stirnseite des Stapels (5) bildet,
- die Vorrichtung derart konfiguriert ist, dass der Stapel (5) von Objekten (6) auf der Anzeigefläche in einem Anzeigemodus darstellbar ist, wobei im Anzeigemodus im Wesentlichen das die Stirnseite des Stapels (5) bildende Objekt (6a) darstellbar ist und die anderen Objekte (6) des Stapels (5) angedeutet anzeigbar sind,
- die Vorrichtung eine Erfassungseinheit aufweist, mittels der eine Annäherung eines Bedienelements erfassbar ist,
- die Benutzerschnittstelleneinrichtung (2) Mittel umfasst, um bei einer Annäherung des Bedienelements die Vorrichtung von dem Anzeigemodus in einen Betriebsmodus umzuschalten, in dem der Stapel (5) perspektivisch auseinandergezogen darstellbar ist, so dass alle im Stapel (5) enthaltenen Objekte (6) oder ein Teil der Objekte (6) so darstellbar sind, dass die Objekte (6) einzeln durch eine Bedienhandlung auswählbar sind, und
- die Eingabeeinrichtung (4) derart mit der Benutzerschnittstelleneinrichtung (2) gekoppelt ist, dass auf die Eingabe die Graphikdaten derart veränderbar sind, dass das erste Objekt (6a) und die zwischen dem ersten (6a) und dem zweiten Objekt (6b) in dem Stapel (5) angeordneten Objekte (6) senkrecht zur Stapelachse bewegt und ausgeblendet werden oder dass die zwischen dem ersten (6a) und dem zweiten Objekt (6b) geordneten Objekte (6) und das zweite Objekt (6b) eingeblendet und senkrecht zur Stapelachse bewegt werden, bis das zweite Objekt (6b) perspektivisch im Vordergrund dargestellt wird.

12. Fahrzeug mit einer Vorrichtung nach Anspruch 11.

## Claims

1. Method for displaying a multiplicity of two-dimensional, organized objects (6) on a display panel (1) in a vehicle, in which
- a user interface device (2) produces graphics data that actuate the display panel (1) such that a subset of the objects (6) are depicted perspectively, wherein a first object (6a) from this subset is depicted perspectively in the foreground, and
- an input by means of an input device (4) prompts a computation unit (3) of the user interface device (2) to alter the graphics data such that a different, second object (6b) is depicted perspectively in the foreground,
wherein
- the graphical objects (6) are depicted in a manner arranged perspectively one after the other in a stack (5), wherein the object (6a) depicted in the foreground forms the end of the stack (5),
- the stack (5) of objects (6) is depicted in a display mode, wherein in the display mode essentially the object (6a) forming the end of the stack (5) is depicted and the other objects (6) in the stack (5) are displayed in an implied manner,
- an approach by an operator control element prompts changeover to an operator control mode, in which the stack (5) is depicted in a perspectively pulled-apart manner, so that all objects (6) included in the stack (5) or some of the objects (6) are depicted such that the objects (6) are individually selectable by an operator control action, and
- the input prompts the graphics data to be altered such that the first object (6a) and the objects (6) arranged between the first (6a) and second (6b) objects in the stack (5) are moved at right angles to the stack axis and hidden or that the objects (6) organized between the first (6a) and second (6b) objects and the second object (6b) are shown and moved at right angles to the stack axis, until the second object (6b) is depicted perspectively in the foreground.

2. Method according to Claim 1,
**characterized**
**in that** the first object (6a) and the objects (6) arranged between the first (6a) and second (6b) objects are hidden in succession or in that the objects (6) organized between the first (6a) and second (6b) objects and the second object (6b) are shown in succession.

3. Method according to Claim 1 or 2,
**characterized**
**in that** the graphical objects are depicted perspectively one after the other in at least two stacks (5).

4. Method according to Claim 3,
**characterized**
**in that** the depiction of the stacks (5) reproduces the number of objects (6) included in the stack (5).

5. Method according to either of Claims 1 and 4, **characterized**
**in that** in the display mode only the object (6a; 6b) forming the end is selectable.

6. Method according to one of Claims 1 to 5,
**characterized**
**in that** the input is made using an input device (4) that is configured as a manual operator control element (4a-4d) and is at a physical distance from the displayed stack (5) or from the display panel (1).

7. Method according to one of the preceding claims,
**characterized in that**
- the input is made by a bidirectionally executable operator control action and
- the direction of the operator control action is taken as a basis for showing or hiding the objects (6) arranged between the first (6a) and second (6b) objects.

8. Method according to one of the preceding claims,
**characterized in that**
- the objects (6) are depicted on a display panel (1) having a touch-sensitive surface and
- the input is made by a gesture executed on the touch sensitive surface.

9. Method according to one of the preceding claims,
**characterized**
**in that** the graphical objects (6) depict menu items of a user menu.

10. Method according to Claim 9,
**characterized**
**in that** the user menu comprises media files for an infotainment device (8) or entries for a telecommunication system (9) in a vehicle.

11. Apparatus for displaying a multiplicity of two-dimensional, organized objects (6) in a vehicle, comprising
- a display panel (1) for depicting at least one subset of the objects (6) perspectively,
- a user interface device (2) by means of which graphics data for the objects (6) can be produced and can be altered by means of a computation unit (3), wherein a first object (6a) can be depicted perspectively in the foreground, and
- an input device (4), coupled to the user interface device (2), for capturing an input that allows the computation unit (3) of the user interface device (2) to be used to alter the graphics data such that a different, second object (6b) can be depicted perspectively in the foreground,
wherein
- the graphics data can be controlled by means of the user interface device (2) such that the graphical objects (6) can be depicted in a manner arranged perspectively one after the other in a stack (5), wherein the object (6a) depicted in the foreground forms the end of the stack (5),
- the apparatus is configured such that the stack (5) of objects (6) can be depicted on the display panel in a display mode, wherein in the display mode essentially the object (6a) forming the end of the stack (5) can be depicted and the other objects (6) in the stack (5) can be displayed in an implied manner,
- the apparatus has a sensing unit that can be used to sense an approach by an operator control element,
- the user interface device (2) comprises means so as, in the event of an approach by the operator control element, to change over the apparatus from the display mode to an operator control mode, in which the stack (5) can be depicted in a perspectively pulled-apart manner, so that all objects (6) included in the stack (5) or some of the objects (6) can be depicted such that the objects (6) are individually selectable by an operator control action, and
- the input device (4) is coupled to the user interface device (2) such that the input can prompt the graphics data to be altered such that the first object (6a) and the objects (6) arranged between the first (6a) and second (6b) objects in the stack (5) are moved at right angles to the stack axis and hidden or that the objects (6) organized between the first (6a) and second (6b) objects and the second object (6b) are shown and moved at right angles to the stack axis, until the second object (6b) is depicted perspectively in the foreground.

12. Vehicle having an apparatus according to Claim 11.

## Revendications

1. Procédé d'affichage d'une pluralité d'objets plans ordonnés (6) sur une surface d'affichage (1) dans un véhicule, dans lequel
- des données graphiques sont générées par un dispositif d'interface utilisateur (2), lesquelles données commandent la surface d'affichage (1) de manière à ce qu'un sous-ensemble des objets (6) soit représenté en perspective, dans lequel un premier objet (6a) dudit sous-ensemble est représenté en perspective au premier plan, et
- lors d'une fourniture en entrée au moyen d'un dispositif de fourniture en entrée (4), une unité de calcul (3) du dispositif d'interface utilisateur (2) modifie les données graphiques de manière à ce qu'un autre objet, ou deuxième objet (6b) soit représenté en perspective au premier plan, dans lequel
- les objets graphiques (6) sont représentés de manière à ce qu'ils soient disposés l'un après l'autre en perspective dans un empilement (5), dans lequel l'objet (6a) représenté au premier plan forme la face avant de l'empilement (5),
- l'empilement (5) d'objets (6) est représenté dans un mode d'affichage, dans lequel, dans ledit mode d'affichage, l'objet (6a) formant la face avant de l'empilement (5) est représenté de manière prononcée et les autres objets (6) de l'empilement (5) sont affichés de manière esquissée,
- lors d'un rapprochement d'un élément de commande, un basculement est effectué à un mode de fonctionnement dans lequel l'empilement (5) est représenté en perspective de manière déployée afin que tous les objets (6) contenus dans l'empilement (5) ou qu'une partie des objets (6) soient représentés de manière à ce que les objets (6) puissent être sélectionnés individuellement par une manipulation de commande, et
- lors de la fourniture en entrée, les données graphiques sont modifiées de manière à ce que le premier objet (6a) et les objets (6) disposés dans l'empilement (5) entre le premier (6a) et le deuxième objet (6b) soient déplacés perpendiculairement à l'axe d'empilement et soient masqués ou à ce que les objets (6) disposés entre le premier (6a) et le deuxième objet (6b) et le deuxième objet (6b) soient intégrés et déplacés perpendiculairement à l'axe d'empilement, jusqu'à ce que le deuxième objet (6b) soit représenté en perspective au premier plan.

2. Procédé selon la revendication 1, **caractérisé en ce que** le premier objet (6a) et les objets (6) disposés entre le premier (6a) et le deuxième objet (6b) sont masqués les uns à la suite des autres ou **en ce que** les objets (6) disposés entre le premier (6a) et le deuxième objet (6b) et le deuxième objet (6b) sont intégrés les uns à la suite des autres.

3. Procédé selon la revendication 1 ou 2, **caractérisé en ce que** les objets graphiques sont représentés l'un après l'autre en perspective dans au moins deux empilements (5).

4. Procédé selon la revendication 3, **caractérisé en ce que** la représentation de l'empilement (5) fait apparaître le nombre des objets (6) contenus dans l'empilement (5).

5. Procédé selon l'une quelconque des revendications 1 ou 4, **caractérisé en ce que**, dans ledit mode d'affichage, seul l'objet (6a ; 6b) formant la face avant peut être sélectionné.

6. Procédé selon l'une quelconque des revendications 1 à 5, **caractérisé en ce que** la fourniture en entrée s'effectue par l'intermédiaire d'un dispositif de fourniture en entrée (4) réalisé sous la forme d'un élément de commande manuel (4a - 4d), spatialement espacé de l'empilement (5) affiché ou de la surface d'affichage (1).

7. Procédé selon l'une quelconque des revendications précédentes, **caractérisé en ce que**
- la fourniture en entrée s'effectue par l'intermédiaire d'une action de commande pouvant être exécutée dans une direction bidirectionnelle et
- les objets (6) disposés entre le premier (6a) et le deuxième objet (6b) sont intégrés ou masqués en fonction de la direction de l'action de commande.

8. Procédé selon l'une quelconque des revendications précédentes, **caractérisé en ce que**
- les objets (6) sont représentés sur une surface d'affichage (1) ayant une surface tactile et
- la fourniture en entrée s'effectue par l'intermédiaire d'un geste réalisé sur la surface tactile.

9. Procédé selon l'une quelconque des revendications précédentes, **caractérisé en ce que** les objets graphiques (6) représentent des éléments de menu d'un menu utilisateur.

10. Procédé selon la revendication 9, **caractérisé en ce que**
le menu utilisateur comprend des fichiers de données multimédia d'un dispositif d'info-divertissement (8) ou des entrées d'un système de télécommunication (9) dans un véhicule.

11. Dispositif d'affichage d'une pluralité d'objets plans ordonnés (6) dans un véhicule, comprenant
- une surface d'affichage (1) destinée à la représentation en perspective d'au moins un sous-ensemble des objets (6),
- un dispositif d'interface utilisateur (2) au moyen duquel des données graphiques des objets (6) peuvent être générées et peuvent être modifiées au moyen d'une unité de calcul (3), dans lequel un premier objet (6a) peut être représenté en perspective au premier plan, et
- un dispositif de fourniture en entrée (4) couplé au dispositif d'interface utilisateur (2) pour la détection d'une fourniture en entrée, par l'intermédiaire duquel les données graphiques peuvent être modifiées au moyen de l'unité de calcul (3) du dispositif d'interface utilisateur (2) de manière à ce qu'un autre objet, ou deuxième objet (6b) puisse être représenté en perspective au premier plan, dans lequel
- les données graphiques peuvent être commandées au moyen du dispositif d'interface utilisateur (2) de manière à ce que les objets graphiques (6) puissent être représentés de manière à ce qu'ils soient disposés l'un après l'autre en perspective dans un empilement (5), dans lequel l'objet (6a) représenté au premier plan forme la face avant de l'empilement (5),
- le dispositif est configuré de manière à ce que, dans un mode d'affichage, l'empilement (5) d'objets (6) puisse être représenté sur la surface d'affichage, dans lequel, dans ledit mode d'affichage, l'objet (6a) formant la face avant de l'empilement (5) peut être représenté de manière prononcée et les autres objets (6) de l'empilement (5) peuvent être affichés de manière esquissée,
- le dispositif comporte une unité de détection au moyen de laquelle un rapprochement d'un élément de commande peut être détecté,
- le dispositif d'interface utilisateur (2) comprend des moyens permettant, lors d'un rapprochement de l'élément de commande, de faire basculer le dispositif dudit mode d'affichage à un mode de fonctionnement dans lequel l'empilement (5) peut être représenté en perspective de manière déployée afin que tous les objets (6) contenus dans l'empilement (5) ou qu'une partie des objets (6) puissent être représentés de manière à ce que les objets (6) puissent être sélectionnés individuellement par une manipulation de commande, et
- le dispositif de fourniture en entrée (4) est couplé au dispositif d'interface utilisateur (2) afin que, lors de la fourniture en entrée, les données graphiques puissent être modifiées de manière à ce que le premier objet (6a) et les objets (6) disposés dans l'empilement (5) entre le premier (6a) et le deuxième objet (6b) soient déplacés perpendiculairement à l'axe d'empilement et soient masqués ou à ce que les objets (6) disposés entre le premier (6a) et le deuxième objet (6b) et le deuxième objet (6b) soient intégrés et déplacés perpendiculairement à l'axe d'empilement, jusqu'à ce que le deuxième objet (6b) soit représenté en perspective au premier plan.

12. Véhicule comportant un dispositif selon la revendication 11.
